# NEUE EUROPÄISCHE PATENTSCHRIFT

(11) **EP 0 780 560 B2**
(45) Veröffentlichungstag und Bekanntmachung des Hinweises auf die Entscheidung über den Einspruch: **09.01.2008**
(45) Hinweis auf die Patenterteilung: 22.03.2000
(21) Anmeldenummer: 96118172.4
(22) Anmeldetag: 13.11.1996
(51) Int. Cl.: F02F 1/42, F01L 1/26

(54) **Zylinderkopf für eine Brennkraftmaschine**
Cylinder head for an internal combustion engine
Culasse pour un moteur à combustion interne

(30) Priorität: 21.12.1995 DE 19548088
(43) Veröffentlichungstag der Anmeldung: 25.06.1997
(73) Patentinhaber: Daimler AG, 70327 Stuttgart (DE)
(72) Erfinder: Astner, Josef, 70327 Stuttgart (DE); Betke, Lucian, 70180 Stuttgart (DE)

(56) Entgegenhaltungen:
- DE-A- 3 710 453
- DE-A- 4 315 233
- DE-A1- 3 604 667
- DE-A1- 4 100 459
- ATZ AUTOMOBILTECHNISCHE ZEITSCHRIFT, Nr. 11, 1.Januar 1994, Seiten 3-5, XP000478680 "INTERDISZIPLINARE MOTOREN-ENTWICKLUNG VOM KONZEPT BIS ZUR SERIE"
- "Mehrventilmotoren", 2. Auflage 1995
- "Gestaltung und Hauptabmessungen der Verbrennungskraftmaschine", Harald Maass, 1979

## Beschreibung

Die Erfindung betrifft einen Zylinderkopf für eine Brennkraftmaschine.

In der DE 36 37 199 A1 ist ein Zylinderkopf für eine Brennkraftmaschine mit zwei Einlaßventilen und zwei Auslaßventilen pro Zylinder beschrieben. Auf jeder Seite einer Längsmittelachse des Zylinderkopfes sind ein Einlaßventil und ein Auslaßventil für jeden Zylinder angeordnet und die Ventile eines Zylinders sind um einen etwa in der Mitte der Querschnittsfläche des Zylinders befindlichen Injektor gruppiert. Auf Ventilschäfte wirken Hebel, welche von einer Nockenwelle betätigt werden.

Bei der bekannten Anordnung befindet sich auf dem Zylinderkopf die Kipphebelanordnung, wobei die Kipphebel einerseits mit den Ventilschäften zusammenwirken und andererseits über Stößel mit einer Nockenwelle in Verbindung stehen. Bei einer solchen Anordnung sind die Nockenwellen im unteren Bereich des Motors gelagert und daher im Falle einer Reparatur schwer zugänglich. Aufgrund der großen Länge der Stößel ergeben sich auch größere Toleranzen der gesamten Kinematik zwischen Nockenwelle und Ventil, was zu einem erhöhten Aufwand beim einstellen des Ventilspiels führt. Auf welche Weise der Injektor in dem Zylinderkopf aufgenommen und befestigt ist, geht aus der genannten Druckschrift nicht hervor.

In der DE 42 35 103 A1 ist ein Zylinderkopf mit einer Nockenwellen-Ventilsteuerung für eine Brennkraftmaschine mit zwei Einlaßventilen und zwei Auslaßventilen pro Zylinder beschrieben. Die Einlaßventile aller Zylinder einer Reihe sind hintereinanderliegend angeordnet, ebenso alle Auslaßventile. Dadurch ist es möglich, eine Nockenwelle den hintereinander ausgerichteten Einlaßventilen und eine weitere Nockenwelle den hintereinander ausgerichteten Auslaßventilen zuzuordnen. Jede dieser Nockenwellen treibt über individuelle Schwenkhebel je Zylinder alle Einlaß- bzw. alle Auslaßventile der Maschine an. Die jeweils einer Zylinderreihe zugeordneten Ventile sind so geneigt angeordnet, daß ihre Achsen sich längs einer Linie auf einer senkrecht zur Trennebene zwischen Zylinderkopf und Zylinderblock verlaufenden Mittelebene schneiden. Da sich die Nockenwelle direkt über der Mitte der Zylinder erstreckt, eignet sich die bekannte Anordnung nicht für Brennkraftmaschinen mit Einspritzung, bei denen zur möglichst gleichmäßigen Verteilung des Kraftstoffes der Injektor möglichst senkrecht und in der Hochachse des Zylinders angeordnet sein soll.

Die DE 43 15 233 A1 offenbart eine direkteinspritzende Brennkraftmaschine mit einem Kraftstoffeinspritzventil, welches im Zylinderkopf zwischen zwei Einlaßventilen und zwei Auslaßventilen des jeweiligen Zylinders angeordnet ist. Jeder Injektor ist dabei von einer aus der Zylinder kopfhaube herausragenden Dichthülse umgeben, welche den Injektor von einem von Zylinderkopf und Zylinderkopfhaube begrenzten ölraum trennen soll. Bei der bekannten Anordnung ist pro Injektor eine Dichthülse vorgesehen und ferner jeweils eine im ölraum untergebrachte Spannpratze erforderlich, die den Injektor über die ständig auf Druck beanspruchte Dichthülse auf einen Sitz im Zylinderkopf abdichtend drückt.

Der Erfindung liegt die Aufgabe zugrunde, einen Zylinderkopf für eine Brennkraftmaschine zu schaffen, bei dem neben einer möglichst zentrischen Anordnung der Injektoren und einer Trennung der kraftstoffführenden Injektoren vom Ölraum eine bezüglich ihrer Formen und Richtungen freiere und optimalere Gestaltung der Einlasskanäle ermöglicht wird.

Diese Aufgabe wird durch einen Zylinderkopf mit den Merkmalen des Anspruchs 1 gelöst.

Der wesentliche Vorteil des erfingungsgemäßen Zylinderkopfes besteht darin, daß durch den Injektortrog eine Trennung zwischen dem Ölraum und dem Injektor erreicht ist, so daß auch im Falle eines undichten Injektors der austretende Kraftstoff nicht in den Ölraum gelangen kann.

Eine bevorzugte Weiterbildung des Erfindungsgegenstandes besteht darin, daß die Bohrungen zur Aufnahme der Injektoren koaxial zur Zylinderhochachse verlaufen. Durch diese Richtung der Injektoren wird der Kraftstoff zentrisch eingespritzt und verteilt sich gleichmäßig über die gesamte Fläche des Zylinders. Damit der Injektortrog nicht zur Erhöhung der zu montierenden Teile führt, ist es zweckmäßig, den Injektortrog einstückig mit dem Zylinderkopf auszuführen und beim Gießen des Zylinderkopfes den Injektortrog zu formen. Damit die Wölbungen im Zylinderkopfboden möglichst flach ausgebildet werden können, ist es von Vorteil, die Ventile mit geringer Neigung anzuordnen. Es wird daher als zweckmäßig angesehen, daß die Ventile mit Ventilschäften versehen sind, deren Ventilachsen geneigt zur Zylinderhochachse verlaufen, wobei der Winkel zwischen der Zylinderhochachse und den Ventilachsen zwischen 2° und 15°, vorzugsweise etwa 6° bis 8° beträgt. Dabei ist es möglich, die Ventile so anzuordnen, daß die Winkel der Ventilachsen gleich sind. Alternativ hierzu kann aber auch vorgesehen werden, daß die Winkel von mindestens zwei Ventilachsen demselben Zylinder zugeordneter Ventile unterschiedlich sind.

Damit der Injektor in dem Zylinderkopf möglichst erschütterungsfrei gegenüber diesem gehalten wird, sollte die Länge der Bohrung zur Aufnahme des Injektors entsprechend bemessen werden. Aus diesem Grund wird es als zweckmäßig angesehen, daß die Bodenfläche des Injektortrogs annähernd auf der Höhe der oberen Enden der Ventilschäfte angeordnet ist. Es ist außerdem zweckmäßig, in dem Injektortrog zwischen jeweils zwei Bohrungen eine von der Bodenfläche des Injektortroges aufragende Wand vorzusehen, durch die mehrere Injektortrogabschnitte gebildet sind. Diese Trennwände sind insbesondere als Schraubenpfeife ausgebildet und dienen zur Befestigung der Halter der Injektoren.

Es ist außerdem von Vorteil, daß die Ventilanordnung jedes Zylinders in Bezug auf die Längsmittelachse verdreht ist, wobei die Ventilachsen der Ventile zu der Längsmittelachse unterschiedliche Abstände aufweisen. Durch eine derartige Anordnung der Ventile wird es möglich, die Einlaßkanäle bezüglich ihrer Formen und Richtungen freier und optimaler zu gestalten. Für eine solche verdrehte Ventilanordnung wird es als besonders zweckmäßig angesehen, daß die Ventilachsen von demselben Zylinder zugeordneten Einlaßventilen eine erste Gerade schneiden, die unter einem Winkel von etwa 60° zur Längsmittelachse verläuft, wohingegen die Ventilachsen der jeweiligen Auslaßventile eine zweite Gerade schneiden, die unter einem Winkel von etwa 75° zur Längsmittelachse verläuft.

Jede der Nockenwellen ist zur Betätigung von Einlaßventilen und Auslaßventilen auf derselben Seite der Längsmittelebene ausgebildet. Dabei ist jede Nockenwelle mit abwechselnd aufeinanderfolgenden Einlaßnocken und Auslaßnocken versehen. Durch diese Ausführung der Ansteuerung von Einlaß- und Auslaßventilen kann das Verbrennungsschadraumvolumen, das ist das Volumen des Brennraums außerhalb der Kolbenmulde, erheblich verkleinert werden.

Die Hebel sind vorzugsweise als Rollenschwinghebel ausgebildet, die sich einerseits auf den oberen Enden der Ventilschäfte abstützen und wobei die anderen Enden der Rollenschwinghebel kugelgelenkartig gelagert sind. Damit die Mantelfläche des Injektorschaftes nicht an den Seitenwänden des Injektortroges anliegt, ist es zweckmäßig, daß der Injektortrog im Bereich der Injektoren bogenförmig erweitert ist, so daß der Injektor einen Abstand zur Wandung des Injektortroges aufweist. In den Bereichen zwischen zwei Injektoren ist die Breite des Injektortroges geringer. Weiterhin ist es vorteilhaft, die Wandung in Längsrichtung des Injektortroges mit nach innen gerichteten Wölbungen auszubilden. Dies hat den Vorteil, daß bei konstanter Wandstärke der Raumbedarf für den Injektortrog geringer ist und auf diese Weise dem Verlauf der Ventilschäfte oder dem Platz für die Nockenwellenlagerdeckel Rechnung getragen wird.

Ein Ausführungsbeispiel des erfindungsgemäßen Zylinderkopfes ist nachstehend anhand der Zeichnung näher erläutert. In der Zeichnung zeigt:
- Fig. 1: Eine Draufsicht auf einen Zylinderkopf mit zwei Nockenwellen,
- Fig. 2: einen Schnitt entlang der Linie II-II in Fig. 1, wobei lediglich der einstückig gegossene Zylinderkopf mit den darin befestigten Injektoren dargestellt ist,
- Fig. 3: einen Schnitt entlang der Linie III-III in Fig. 1,
- Fig. 4: eine Ansicht des Zylinderkopfbodens.

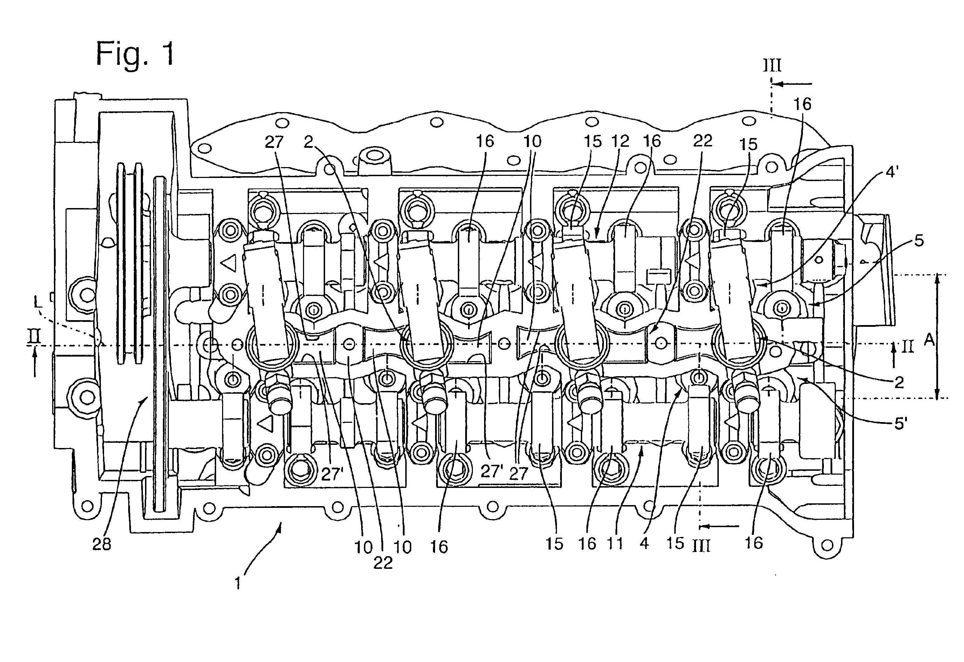

In Fig. 1 ist die Draufsicht auf einen Zylinderkopf 1 gezeigt, der für eine Brennkraftmaschine mit vier in Reihe liegenden Zylindern vorgesehen ist. Entlang einer Längsmittelebene L sind vier Injektoren 2 angeordnet, wobei um den Injektor 2 herum vier Ventile pro Zylinder gruppiert sind, nämlich zwei Einlaßventile 4, 4' und zwei Auslaßventile 5, 5'. Dabei ist die Anordnung so getroffen, daß auf jeder Seite der Längsmittelebene L jeweils ein Einlaßventil 4 und ein Auslaßventil 5' bzw. ein Einlaßventil 4' und ein Auslaßventil 5 vorgesehen sind. Auf dem Zylinderkopf 1 sind zwei Nockenwellen 11 und 12 montiert, die in einem Abstand A parallel zueinander verlaufen und über einen Riementrieb 28 miteinander gekoppelt sind. Jede der Nockenwellen 11, 12 ist mit Einlaßnocken 15 und Auslaßnocken 16 versehen, wobei an jeder Nockenwelle 11, 12 die Einlaßnocken 15 und Auslaßnocken 16 jeweils abwechselnd aufeinanderfolgend angeordnet sind. Dies entspricht auch der Anordnung der Ventile, die unterhalb der Nockenwelle liegen und die in Richtung der Längsmittelachse L gesehen ebenfalls abwechselnd aufeinanderfolgen. Zwischen den Nockenwellen 11, 12 erstreckt sich in dem Abstand A in Richtung der Längsmittelachse L ein Injektortrog 10, der vom vordersten bis zum hintersten Injektor 2 reicht. Der Injektortrog 10 wird teilweise von einer Wandung 27, die nach innen gewölbt ist und teilweise von einer ebenen Wandung 27' begrenzt. Aufgrund dieser Konfiguration ist die Breite des Injektortroges 10 nicht konstant. Zwischen zwei Injektoren 2 ist in dem Injektortrog 10 eine Trennwand 22 vorgesehen, so daß der Injektortrog 10 nicht über die gesamte Länge durchgehend ist.

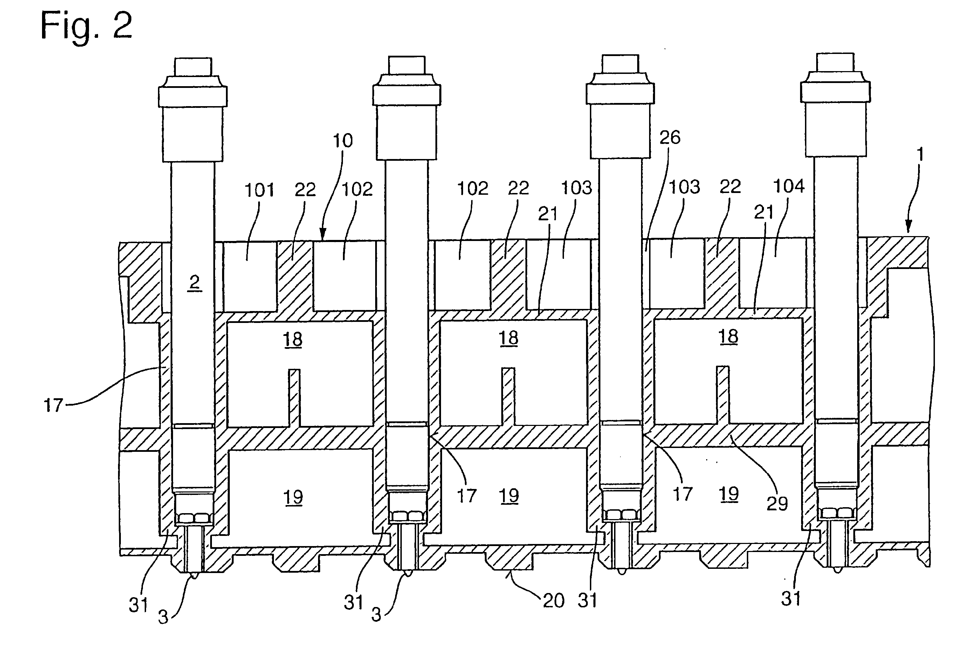

Die Fig. 2 zeigt einen Schnitt entlang der Linie II-II in Fig. 1, wobei lediglich der einstückig gegossene Zylinderkopf 1 mit den darin befestigten Injektoren 2 dargestellt ist. An dem Zylinderkopf 1 ist entlang der Oberseite der Injektortrog 10 ausgeformt, dessen Bodenfläche 21 sich parallel zur Oberkante des Zylinderkopfes 1 erstreckt. Von dem Injektortrog 10 ausgehend, verlaufen Bohrungen 17 in Richtung auf einen Zylinderkopfboden 20, wobei die Bohrungen 17 nach einem radialen Absatz 31 am Zylinderkopfboden 20 münden. In geringem Abstand über dem Zylinderkopfboden 20 erstrecken sich Hohlräume 19, die als Kühlmittelkanäle dienen. In jeder der Bohrungen 17 befindet sich ein Injektor 2, wobei diese Injektoren 2 in den Bohrungen 17 erschütterungsfrei und dicht gehalten sind. An ihren unteren Enden besitzen die Injektoren 2 Injektordüsen 3, durch die der Kraftstoff in den Brennraum eingebracht wird.

In dem Injektortrog 10 sind zwischen jeweils zwei Injektoren 2 Trennwände 22 ausgebildet, die aus der Bodenfläche 21 annähernd senkrecht aufragen und auf diese Weise den Injektortrog in mehrere Injektortrogabschnitte 101, 102, 103, 104 aufteilen. Im Bereich jedes Injektors 2 ist der Injektortrog bogenförmig erweitert, so daß eine Wandung 26 des Injektortroges 10 den Injektor 2 in gleichmäßigem Abstand umgibt. Zwischen der Bodenfläche 21 des Injektortroges 10 und den Hohlräumen 19 für das Motorkühlmittel sind Hohlräume 18 gebildet, die von den Hohlräumen 19 getrennt sind. Die Hohlräume 18 sind Teil des Ölraums, in dem sich die oberen Enden der Ventilschälfte, die Schwinghebel, Ventilfedern und dergleichen befinden. Zwischen der Bodenfläche 21 des Injektortroges 10 und dem Zylinderkopfboden ist von dem gegossenen Zylinderkopf 1 durch eine Trennwand 29 lediglich soviel Material vorhanden ist, daß die Bohrungen 17 darin gefertigt werden können. Diese Gestaltung des Zylinderkopfes 1 führt zu einer deutlichen Reduzierung des Gewichtes. In der Fig. 2 sind aus Gründen einer übersichtlicheren Darstellung die Ventile und Ventilsitze nicht gezeigt.

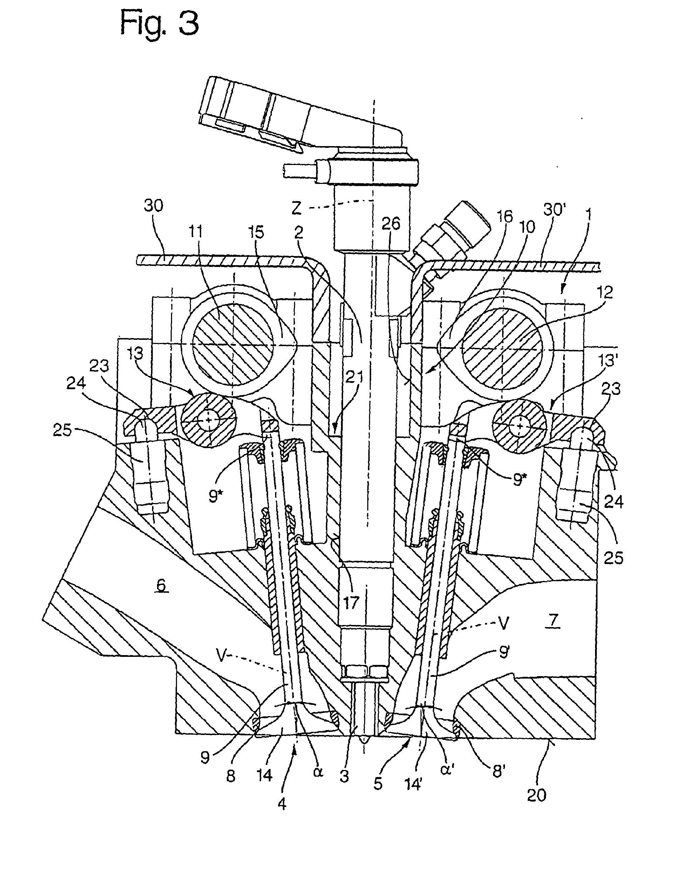

Die Fig. 3 zeigt einen Schnitt entlang der Linie III-III in Fig. 1, so daß das Einlaßventil 4 und das Auslaßventil 5 in einer Ebene zu liegen scheinen, obwohl aufgrund der gegenüber der Längsmittelachse verdrehten Anordnung der Ventile diese in verschiedenen Ebenen liegen. An dem Zylinderkopfboden 20 sind die Ventile 4 und 5 angeordnet, wobei diese jeweils einen Ventilteller 14, 14' und einen Ventilschaft 9, 9' sowie einen Ventilsitzring 8, 8' umfassen. Das Einlaßventil 4 verschließt einen Einlaßkanal 6 und das Auslaßventil 5 einen Auslaßkanal 7.

Zwischen den Ventilen 4 und 5 befindet sich die Injektordüse 3, die das untere Ende eines in der Zylinderhochachse Z verlaufenden Injektors 2. Der Injektor 2 wird in der Bohrung 17 des Zylinderkopfes 1 gehalten, wobei sich oberhalb der Bohrung 17 der Injektortrog 10 erstreckt. Der Injektortrog 10 hat eine Bodenfläche 21, von der aus die Wandung 26 senkrecht nach oben verläuft, wobei die Wandung 26 sich bogenförmig um den Injektor 2 erstreckt und diesen mit Abstand umgibt. Seitlich neben dem Injektortrog 10 befinden sich die Nockenwellen 11 und 12, die mit den Einlaßnocken 15 und Auslaßnocken 16 bestückt sind. An den oberen Enden 9* der Ventilschäfte 9, 9' liegen Rollenschwinghebel 13, 13', die mit ihren anderen - als Kugelkalotte 23 ausgebildeten - Enden auf einem Kugelkopf 24 eines Hydroelementes 25 abgestützt sind. Auf dem oberen Rand des Injektortroges 10 sind Zylinderkopfhauben 30, 30' aufgesetzt und dichtend befestigt. Diese Zylinderkopfhauben 30, 30' überdecken die Nockenwellen 11, 12 und Rollenschwinghebel 13, 13' und bilden auf diese Weise eine Begrenzung des Ölraums.

Wie aus Fig. 3 weiter ersichtlich ist, sind die Ventilachsen V der Ventile 4, 5 bezogen auf die Zylinderhochachse Z geneigt angeordnet, wobei der Winkel α, α' zwischen der Zylinderhochachse Z und den Ventilachsen V zwischen 2° und 15°, vorzugsweise etwa 6° bis 8° beträgt. in dem Ausführungsbeispiel der Fig. 3 ist die Neigung der beiden Ventilachsen V gleich, das heißt auch die Winkel α und α' sind gleich, es können jedoch auch Anordnungen vorgesehen werden, bei denen α und α' unterschiedliche Werte haben.

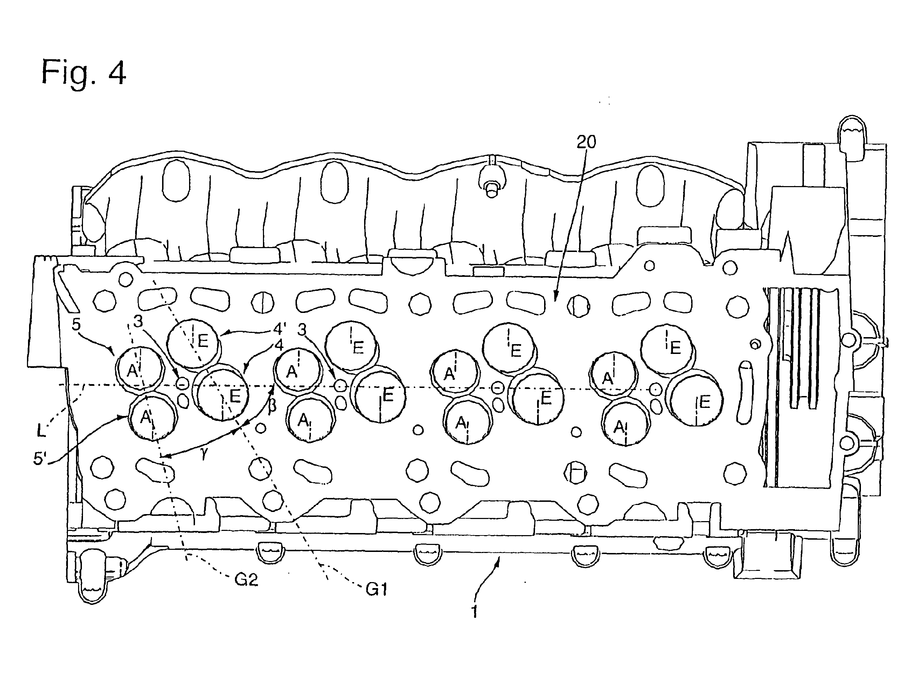

Die Fig. 4 zeigt eine Ansicht des Zylinderkopfbodens 20 des Zylinderkopfes 1, so daß die Anordnung der Ventile 4, 4', 5, 5' bezogen auf die Längsmittelachse L deutlich wird. Wie ersichtlich ist, sind die Ventilanordnungen pro Zylinder jeweils gleich und um jede der Injektordüsen 3 sind vier Ventile gruppiert. Dabei befindet sich jeweils ein Auslaßventil 5 und Einlaßventil 4' auf einer Seite der Längsmittelachse L, wohingegen ein weiteres Auslaßventil 5' und Einlaßventil 4 auf der anderen Seite der Längsmittelachse L angeordnet sind. Diese Lage der Ventile 4, 4', 5, 5' ergibt eine unsymmetrische Anordnung, die gegenüber der Längsmittelachse L verdreht ist. Aufgrund dieser Verdrehung ergeben sich auch unterschiedliche Abstände der Ventilmittelpunkte zu der Längsmittelachse L. Es wird jedoch deutlich, daß die Ventilachsen der demselben Zylinder zugeordneten Einlaßventile 4, 4' eine erste Gerade G1 schneiden, die unter einem Winkel β von etwa 60° zur Längsmittelachse L verläuft. Die Ventilachsen von demselben Zylinder zugeordneten Auslaßventilen 5, 5' schneiden eine zweite Gerade G2, die zu der Längsmittelachse L einen Winkel γ von etwa 75° einschließt.

## Patentansprüche

1. Zylinderkopf (1) für eine Brennkraftmaschine mit zwei Einlaßventilen (4, 4') und zwei Auslaßventilen (5, 5') pro Zylinder, wobei auf jeder Seite einer Längsmittelachse (L) des Zylinderkopfes (1) ein Einlaßventil (4 bzw. 4') und ein Auslaßventil (5 bzw. 5') für jeden Zylinder angeordnet und die Ventile (4, 4', 5, 5') eines Zylinders um einen etwa in der Mitte der Querschnittsfläche des Zylinders befindlichen Injektor (2) gruppiert sind und mit auf Ventilschäfte (9, 9') wirkenden Hebeln (13, 13'), welche von zwei Nockenwellen (11, 12), die parallel zueinander über den Hebeln (13, 13') verlaufend angeordnet sind, betätigt werden und wobei in dem Abstand (A) zwischen den Nockenwellen (11, 12) ein in Richtung der Längsmittelachse (L) verlaufender Injektortrog (10) vorgesehen ist, von dem Bohrungen (17) ausgehen, in denen die Injektoren (2) aufgenommen sind,
wobei ferner die Ventile (4, 4', 5, 5') jedes Zylinders bezüglich einer Symmetrielage beiderseits der Längsmittelachse (L) verdreht um die Zylinderachse (Z) des jeweiligen Zylinders angeordnet sind, wobei Ventilachsen (V) der Ventile (4, 4', 5, 5') zu der Längsmittelachse (L) unterschiedliche Abstände aufweisen und wobei die Ventilachsen (V) von demselben Zylinder zugeordneten Einlaßventilen (4, 4') eine erste Gerade (G1) schneiden, die unter einem Winkel (β) von etwa 60° zur Längsmittelachse (L) verläuft und wobei
die Ventilachsen (V) von demselben Zylinder zugeordneten Auslaßventilen (5, 5') eine zweite Gerade (G2) schneiden, die unter einem Winkel (γ) von etwa 75° zur Längsmittelachse (L) verläuft.

2. Zylinderkopf nach Anspruch 1,
**dadurch gekennzeichnet, daß** die Bohrungen (17) zur Aufnahme der Injektoren (2) koaxial zur Zylinderhochachse (Z) verlaufen.

3. Zylinderkopf nach einem der vorhergehenden Ansprüche,
**dadurch gekennzeichnet, daß** der Injektortrog (10) einstückig mit dem Zylinderkopf (1) ausgeführt und beim Gießen des Zylinderkopfes (1) geformt ist.

4. Zylinderkopf nach einem der vorhergehenden Ansprüche,
**dadurch gekennzeichnet, daß** die Ventilschäfte (9, 9') der Einlaßventile (4, 4') und Auslaßventile (5, 5') beziehungsweise deren Ventilachsen (V) geneigt zur Zylinderhochachse (Z) verlaufen, wobei der Winkel (α, α') zwischen der Zylinderhochachse (Z) und den Ventilachsen (V) zwischen 2° und 15°, vorzugsweise etwa 6° bis 8° beträgt.

5. Zylinderkopf nach Anspruch 4,
**dadurch gekennzeichnet, daß** die Winkel (α, α') der Ventilachsen (V) gleich sind.

6. Zylinderkopf nach Anspruch 4,
**dadurch gekennzeichnet, daß** die Winkel (α, α') von mindestens zwei Ventilachsen (V) demselben Zylinder zugeordneter Ventile (4, 5) unterschiedlich sind.

7. Zylinderkopf nach einem der Ansprüche 4 bis 6,
**dadurch gekennzeichnet, daß** eine Bodenfläche (21) des Injektortrogs (10) annähernd auf der Höhe der oberen Enden (9*) der Ventilschäfte (9, 9') angeordnet ist.

8. Zylinderkopf nach Anspruch 7,
**dadurch gekennzeichnet, daß** in dem Injektortrog (10) zwischen jeweils zwei Bohrungen (17) eine von der Bodenfläche (21) des Injektortroges (10) aufragende Trennwand (22) vorgesehen ist, durch die mehrere Injektortrogabschnitte (101, 102, 103, 104,) gebildet sind.

9. Zylinderkopf nach Anspruch 8,
**dadurch gekennzeichnet, daß** die Trennwand (22) als Schraubenpfeife ausgebildet ist.

10. Zylinderkopf nach einem der vorhergehenden Ansprüche,
**dadurch gekennzeichnet, daß** am oberen Rand des Injektortroges (10) Zylinderkopfhauben (30, 30') dichtend befestigt sind.

11. Zylinderkopf nach einem der vorhergehenden Ansprüche,
**dadurch gekennzeichnet, daß** jede der Nockenwellen (11, 12) zur Betätigung von Einlaßventilen (4, 4') und Auslaßventilen (5, 5') ausgebildet ist.

12. Zylinderkopf nach Anspruch 11,
**dadurch gekennzeichnet, daß** jede Nockenwelle (11, 12) mit abwechselnd aufeinanderfolgenden Einlaßnocken (15) und Auslaßnocken (16) versehen ist.

13. Zylinderkopf nach einem der vorhergehenden Ansprüche,
**dadurch gekennzeichnet, daß** die auf die Ventilschäfte (9, 9') wirkenden Hebel als Rollenschwinghebel (13, 13') ausgebildet sind, die sich einerseits auf den oberen Enden (9*) der Ventilschäfte (9, 9') abstützen und die Rollenschwinghebel (13, 13') an dem anderen Ende kugelgelenkartig gelagert sind.

14. Zylinderkopf nach einem der vorhergehenden Ansprüche,
**dadurch gekennzeichnet, daß** der Injektortrog (10) im Bereich der Injektoren (2) bogenförmig erweitert ist, so daß der Injektor (2) einen Abstand zur Wandung (26) des Injektortroges (10) aufweist und in den dazwischenliegenden Bereichen der Injektortrog (10) eine geringere Breite besitzt.

15. Zylinderkopf nach Anspruch 14,
**dadurch gekennzeichnet, daß** die Wandung (27) in Längsrichtung des Injektortroges (10) nach innen gerichtete Wölbungen aufweist.

## Claims

1. Cylinder head (1) for an internal combustion engine having two inlet valves (4, 4') and two outlet valves (5, 5') per cylinder, with one inlet valve (4 or 4') and one outlet valve (5 or 5') for each cylinder being arranged on each side of a longitudinal central axis (L) of the cylinder head (1), and the valves (4, 4', 5, 5') of one cylinder being grouped about an injector (2) which is situated approximately in the centre of the cross sectional area of the cylinder, and having levers (13, 13') which act on valve shanks (9, 9') and which are actuated by two camshafts (11, 12) which are arranged so as to run parallel to one another above the levers (13, 13'), and with an injector trough (10) which runs in the direction of the longitudinal central axis (L) being provided in the spacing (A) between the camshafts (11, 12), from which injector trough (10) proceed bores (17) in which the injectors (2) are held,
with the valves (4, 4', 5, 5') of each cylinder additionally being arranged so as to be rotated about the cylinder axis (Z) of the respective cylinder with respect to a symmetrical position at both sides of the longitudinal central axis (L), with valve axes (V) of the valves (4, 4', 5, 5') having different spacings with respect to the longitudinal central axis (L), and with the valve axes (V) of inlet valves (4, 4') which are assigned to the same cylinder intersecting a first straight line (G1) which runs at an angle (β) of approximately 60° with respect to the longitudinal central axis (L), and with
the valve axes (V) of outlet valves (5, 5') which are assigned to the same cylinder intersecting a second straight line (G2) which runs at an angle (γ) of approximately 75° with respect to the longitudinal central axis (L).

2. Cylinder head according to Claim 1,
**characterized in that** the bores (17) for holding the injectors (2) run coaxially with respect to the cylinder vertical axis (Z).

3. Cylinder head according to one of the preceding claims,
**characterized in that** the injector trough (10) is formed in one piece with the cylinder head (1) and is shaped during the casting of the cylinder head (1).

4. Cylinder head according to one of the preceding claims,
**characterized in that** the valve shanks (9, 9') of the inlet valves (4, 4') and outlet valves (5, 5') or their valve axes (V) run in an inclined fashion with respect to the cylinder vertical axis (Z), with the angles (α, α') between the cylinder vertical axis (Z) and the valve axes (V) being between 2° and 15°, preferably approximately 6° to 8°.

5. Cylinder head according to Claim 4,
**characterized in that** the angles (α, α') of the valve axes (V) are equal.

6. Cylinder head according to Claim 4,
**characterized in that** the angles (α, α') of at least two valve axes (V) of valves (4, 5) which are assigned to the same cylinder are different.

7. Cylinder head according to one of Claims 4 to 6,
**characterized in that** a base face (21) of the injector trough (10) is arranged at approximately the level of the upper ends (9*) of the valve shanks (9, 9').

8. Cylinder head according to Claim 7,
**characterized in that**, in the injector trough (10), a partition (22) which projects from the base face (21) of the injector trough (10) is provided between in each case two bores (17), by means of which partition (22) a plurality of injector trough sections (101, 102, 103, 104) are formed.

9. Cylinder head according to Claim 8,
**characterized in that** the partition (22) is embodied as a screw channel.

10. Cylinder head according to one of the preceding claims,
**characterized in that** cylinder head covers (30, 30') are sealingly fastened to the upper edge of the injector trough (10).

11. Cylinder head according to one of the preceding claims,
**characterized in that** each of the camshafts (11, 12) is designed for actuating inlet valves (4, 4') and outlet valves (5, 5').

12. Cylinder head according to Claim 11,
**characterized in that** each camshaft (11, 12) is provided with alternatively successive inlet cams (15) and outlet cams (16).

13. Cylinder head according to one of the preceding claims,
**characterized in that** the levers which act on the valve shanks (9, 9') are embodied as roller valve levers (13, 13') which are supported at one side on the upper ends (9*) of the valve shanks (9, 9'), and the roller valve levers (13, 13') are mounted in the manner of a ball joint at the other end.

14. Cylinder head according to one of the preceding claims,
**characterized in that** the injector trough (10) is widened in a curved fashion in the region of the injectors (2), so that the injector (2) has a spacing with respect to the wall (26) of the injector trough (10), and has a smaller width in the interposed regions of the injector trough (10).

15. Cylinder head according to Claim 14,
**characterized in that** the wall (27) has inwardly-aligned convexities in the longitudinal direction of the injector trough (10).

## Revendications

1. Culasse (1) pour un moteur à combustion interne, comprenant deux soupapes d'admission (4, 4') et deux soupapes d'échappement (5, 5') par cylindre, une soupape d'admission (4, 4') et une soupape d'échappement (5, 5') pour chaque cylindre étant disposées de chaque côté d'un axe médian longitudinal (L) de la culasse (1), et les soupapes (4, 4', 5, 5') d'un cylindre étant regroupées autour d'un injecteur (2) situé approximativement au milieu de la surface en section transversale du cylindre, et comprenant des leviers (13, 13') agissant sur les tiges des soupapes (9, 9'), qui sont actionnés par deux arbres à cames (11, 12) qui s'étendent parallèlement l'un à l'autre par-dessus les leviers (13, 13'), et une auge d'injecteur (10) étant prévue dans la distance (A) entre les arbres à cames (11, 12) et s'étendant dans la direction de l'axe médian longitudinal (L), depuis laquelle partent des alésages (17) dans lesquels les injecteurs (2) sont reçus,
les soupapes (4, 4', 5, 5') de chaque cylindre étant en outre tournées, par rapport à une position symétrique de part et d'autre de l'axe médian longitudinal (L), autour de l'axe de cylindre (Z) du cylindre respectif, les axes (V) des soupapes (4, 4', 5, 5') présentant des distances différentes par rapport à l'axe médian longitudinal (L) et les axes (V) de soupapes d'admission (4, 4') associées au même cylindre coupant une première droite (G1) qui s'étend suivant un angle (β) d'environ 60° par rapport à l'axe médian longitudinal (L), et les axes (V) de soupapes d'échappement (5, 5') associées au même cylindre coupant une deuxième droite (G2) qui s'étend suivant un angle (γ) d'environ 75° par rapport à l'axe médian longitudinal (L).

2. Culasse selon la revendication 1,
**caractérisée en ce que** les alésages (17) pour recevoir les injecteurs (2) s'étendent coaxialement par rapport à l'axe vertical du cylindre (Z).

3. Culasse selon l'une quelconque des revendications précédentes, **caractérisée en ce que** l'auge d'injecteur (10) est réalisée d'une seule pièce avec la culasse (1) et est moulée lors de la coulée de la culasse (1).

4. Culasse selon l'une quelconque des revendications précédentes, **caractérisée en ce que** les tiges de soupape (9, 9') des soupapes d'admission (4, 4') et des soupapes d'échappement (5, 5') respectivement de leurs axes (V) de soupape sont inclinées par rapport à l'axe vertical du cylindre (Z), l'angle (α, α') entre l'axe vertical du cylindre (Z) et l'axe (V) des soupapes étant compris entre 2° et 15°, de préférence entre environ 6° et 8°.

5. Culasse selon la revendication 4,
**caractérisée en ce que** les angles (α, α') des axes (V) des soupapes sont identiques.

6. Culasse selon la revendication 4,
**caractérisée en ce que** les angles (α, α') d'au moins deux axes (V) de soupapes (4, 5) associées au même cylindre sont différents.

7. Culasse selon l'une quelconque des revendications précédentes,
**caractérisée en ce qu'**une surface de fond (21) de l'auge d'injecteur (10) est disposée approximativement à la hauteur des extrémités supérieures (9*) des tiges de soupape (9, 9').

8. Culasse selon la revendication 7,
**caractérisée en ce que** l'on prévoit dans l'auge d'injecteur (10) entre deux alésages (17) respectifs, une paroi de séparation (22) dépassant de la surface de fond (21) de l'auge d'injecteur (10), à travers laquelle sont formées plusieurs portions d'auge d'injecteur (101, 102, 103, 104).

9. Culasse selon la revendication 8,
**caractérisée en ce que** la paroi de séparation (22) est réalisée sous forme de sifflet hélicoïdal.

10. Culasse selon l'une quelconque des revendications précédentes,
**caractérisée en ce que** des chapeaux de culasse (30, 30') sont fixés hermétiquement sur le bord supérieur de l'auge d'injecteur (10).

11. Culasse selon l'une quelconque des revendications précédentes, **caractérisée en ce que** chacun des arbres à cames (11, 12) est réalisé pour actionner des soupapes d'admission (4, 4') et des soupapes d'échappement (5, 5').

12. Culasse selon la revendication 11,
**caractérisée en ce que** chaque arbre à cames (11, 12) est pourvu d'une succession alternée de cames d'admission (15) et de cames de sortie (16).

13. Culasse selon l'une quelconque des revendications précédentes, **caractérisée en ce que** les leviers agissant sur les tiges de soupapes (9, 9') sont réalisés sous forme de leviers oscillants à galets (13, 13'), qui s'appuient d'une part sur les extrémités supérieures (9*) des tiges de soupapes (9, 9') et qui sont montés à l'autre extrémité sous forme d'articulations sphériques.

14. Culasse selon l'une quelconque des revendications précédentes, **caractérisée en ce que** l'auge d'injecteur (10) est élargie en forme d'arc dans la région des injecteurs (2), de sorte que l'injecteur (2) présente une distance par rapport à la paroi (26) de l'auge d'injecteur (10) et possède une plus petite largeur dans les régions intermédiaires de l'auge d'injecteur (10).

15. Culasse selon la revendication 14,
**caractérisée en ce que** la paroi (27) présente des courbures orientées vers l'intérieur dans la direction longitudinale de l'auge d'injecteur (10).
